# EUROPÄISCHE PATENTSCHRIFT

(11) **EP 0 850 369 B1**
(45) Veröffentlichungstag und Bekanntmachung des Hinweises auf die Patenterteilung: **21.07.1999**
(21) Anmeldenummer: 96932588.5
(22) Anmeldetag: 23.09.1996
(51) Int. Cl.: F16H 3/42

(54) **KEGELSTUMPFSCHNECKENGETRIEBE**
TRUNCATED CONE WORM GEAR
TRANSMISSION A VIS SANS FIN TRONCONIQUE

(30) Priorität: 22.09.1995 DE 19535319
(43) Veröffentlichungstag der Anmeldung: 01.07.1998
(73) Patentinhaber: Förg, Alfred, 82178 Puchheim (DE)
(72) Erfinder: Förg, Alfred, 82178 Puchheim (DE)
(74) Vertreter: Beetz & Partner Patentanwälte
(86) Internationale Anmeldenummer: EP9604149
(87) Internationale Veröffentlichungsnummer: WO9711291

(56) Entgegenhaltungen:
- AT-B- 400 745
- FR-A- 449 056
- GB-A- 358 177
- GB-A- 2 095 773
- US-A- 2 970 494

## Beschreibung

Die Erfindung betrifft ein Kegelstumpfschneckengetriebe mit einer hohen Spreizung und einem schlupffreien und reibungsarmen Kraftfluß. Um das Drehmoment und die Drehzahlen von Antriebsaggregaten in Fahrzeugen den jeweiligen Anforderungen anzupassen, werden üblicherweise Getriebe verwendet. Die wichtigsten Getriebearten teilen sich in vier Hauptgruppen:
I. konventionelle Schaltgetriebe
II. halbautomatische Getriebe (automatische Kupplung)
III. vollautomatische Getriebe (konventionell)
IV. stufenlose Getriebe (CVT Continously Variable Transmission).

Heutige Zahnradgetriebe decken nur einen begrenzten Teil des Drehzahlspektrums ab. Da diese Getriebe in der Regel zwischen 3 - 6 (PKW) und bis zu 16 (NKW) Übersetzungsstufen verfügen, müssen die Sprünge zwischen den einzelnen Gängen durch sich verändernde Drehzahlen des Motors ausgeglichen werden. Da sich das höchste Drehmoment eines Verbrennungsmotors in einem relativ engen Drehzahlbereich befindet, arbeitet der Motor oft in Drehzahlregionen, in denen entweder zu wenig Drehmoment zur Verfügung steht oder der Energieverbrauch im Verhältnis zur Leistung zu hoch ist.

Stufenlose Umschlingungs- und Kettenwandlergetriebe gemäß dem Stand der Technik bestehen im wesentlichen aus einem Variator. Technisch setzt sich der Variator aus vier jeweils zwei gegenüberliegenden Kegelscheibenpaaren und einer Kette zusammen. Die Kette umläuft die beiden Kegelscheibenpaare reibschlüssig, die je auf einer Achse parallel zueinander laufen. Durch die axiale Verstellung der Kegelscheiben läuft die Kette auf variablen Durchmessern, so daß sich die Übersetzung stufenlos ändern läßt. Aufgrund ihrer stufenlosen Variablität können CVT-Getriebe das Kennfeld des Motors besser nutzen, sind aber derzeit lediglich eingeschränkt einsetzbar, da sie nur ein Getriebeeingangsmoment bis etwa 300 Nm bewältigen, nur eine eingeschränkte Getriebespreizung ermöglichen und relativ hohe Reibungsverluste aufweisen. ("Fahrzeuggetriebe", Grundlagen, Auswahl, Auslegung und Konstruktion, Springer-Verlag Berlin 1994, G. Lechner und H. Naunheimer).

Die GB-A-358 177 zeigt ein gattungsbildendes Getriebe, bei dem ein Kegelstumpf mit einer Antriebswelle gekoppelt ist. Weiterhin ist ein Übersetzungselement zwischen dem angetriebenen Kegelstumpf und einer Abtriebswelle angeordnet. Das Übersetzungselement ist frei bewegbar an einem entsprechenden Träger vorgesehen. Das Übersetzungselement ist somit nicht von außen gesteuert verschiebbar, um das Übersetzungsverhältnis einzustellen.

Die GB-A-2 095 773 und die US-A-2 970 494 zeigen weitere Beispiele von Getrieben, welche als Teilelemente Kegelstümpfe enthalten. Die gewindeartigen Vorstehungen dieser Kegelstümpe sind jedoch nicht derart ausgebildet, daß die Anzahl der gebildeten Gewindegänge sich mit verjüngendem Kegelstumpfdurchmesser stufenweise verringert. Somit kann gemäß diesen Getrieben keine große Spreizungssteigerung erzielt werden.

Aufgabe der Erfindung ist es, ein Fahrzeuggetriebe zu schaffen, das eine möglichst hohe Spreizung bzw. Regelbereich mit einem möglichst reibungsarmen bzw. schlupffreien Kraftfluß ermöglicht.

Die Aufgabe wird gemäß den Merkmalen des unabhängigen Patentanspruchs gelöst. Die abhängigen Patentansprüche geben vorteilhafte Ausführungsformen und Weiterentwicklungen der Erfindung an.

Erfindungsgemäß ist ein Fahrzeuggetriebe mit einem Kegelstumpf vorgesehen, der mit einer Antriebswelle gekoppelt ist. Weiterhin ist ein Übersetzungselement vorgesehen, dessen Drehachse zur Drehachse des Kegelstumpfs geneigt ist und das mit dem Kegelstumpf in Eingriff steht. Darüber hinaus ist ein Angleichungsgetriebe in Eingriff mit dem Übersetzungselement angeordnet, wobei das Angleichungsgetriebe mit einer Antriebswelle in Verbindung steht. Zum Einstellen des Übersetzungsverhältnisses kann das Übersetzungselement längs eines Außenumfangs des Kegelstumpfs bzw. einer Kegelfläche verschoben werden.

Anstatt das Übersetzungselement zu bewegen, kann natürlich auch der Kegelstumpf relativ zum Übersetzungselement verschoben werden. Der Außenumfang bzw. die Kegelfläche des Kegelstumpf kann weiterhin gerade oder gewölbt ausgebildet sein. Die Wölbung kann entweder konkav oder konvex sein. Denkbar sind auch Kombinationen der oben angeführten Kegelflächen. Durch eine Veränderung der Kegelflächenwölbung kann die Spreizungscharakteristik des Getriebes eingestellt werden.

Erfindungsgemäß kann ein großer Regelbereich des Getriebes erzielt werden, so daß die mit dem Getriebe gekoppelten Antriebsaggregate, beispielsweise Brennkraftmaschinen, immer in ihren günstigsten Drehmoment- und Verbrauchsbereich arbeiten können. Weiterhin kann das erfindungsgemäße Fahrzeuggetriebe auch für hohe Eingangsdrehmomente verwendet werden. Zudem kann erfindungsgemäß ein Getriebe realisiert werden, welches einen schlupffreien Kraftfluß ermöglicht und nur relativ geringe Reibungsverluste aufweist. Durch den großen erfindungsgemäßen Regelbereich kann bei entsprechender Bauteilauslegung eine Kupplung oder ein Wandler z.B. beim Anfahren überflüssig werden. Beispielsweise kann erfindungsgemäß eine Spreizung von 128 erzielt werden.

Gemäß der Erfindung kann der Kegelstumpf an seinem Außenumfang gewindeartig ausgebildete Erhebungen aufweisen. Der Kegelstumpf kann aber auch Nuten aufweisen, die einen gewindeartigen Verlauf haben. Der Verlauf der Nuten bzw. der gewindeartig ausgebildeten Erhebungen an dem Kegelstumpfumfang ist in etwa schneckenartig.

Die gewindeartig ausgebildeten Erhebungen in dem Kegelstumpf können hierbei eine Teilung aufweisen, welche sich mit einem verjüngendem Kegelstumpfdurchmesser vermindert. Es ist aber auch möglich, eine Teilung zu verwenden, die über einen gewissen Teilbereich oder über den gesamten Kegelstumpf hinweg konstant bleibt. Dadurch vermindert sich jedoch die erzielbare Spreizung.

Weiterhin kann die Anzahl der gewindeartig ausgebildeten Erhebungen bzw. der Nuten stufenweise mit sich verjüngendem Kegelstumpfdurchmesser verringert werden. Hierbei kann etwa bei einem Übergang von einer Stufe mit mehr Gewindegängen zu einer nächsten Stufe mit weniger Gewindegängen jeweils ein Gewindegang der Stufe mit mehr Gewindegängen in der Stufe mit weniger Gewindegängen nicht mehr weitergeführt werden. Es ist aber auch möglich, beispielsweise nur einen von drei Gewindegängen in der nächsten Stufe weiterzuführen. Es sei angemerkt, daß die obigen Angaben der stufenweisen Verringerung nur Beispiele darstellen. Natürlich kann die Gewindeganganzahl auch über den gesamten Kegelstumpfumfang hinweg konstant bleiben, wodurch sich natürlich wieder die Spreizung vermindern würde.

Darüber hinaus kann das Übersetzungselement Zapfen aufweisen, die mit den Erhebungen in Eingriff treten. Die Zapfen können dabei drehbar im Übersetzungselement gelagert werden und weiterhin miteinander in einem Dreheingriff stehen. Damit treibt ein sich gerade an einer Erhebung des Kegelstumpfs abwälzender Zapfen den nächsten Zapfen für eine Drehbewegung desselben an, so daß der nächste Zapfen schon mit einer gewissen Drehbewegung an dem Gewindegang angreift. Somit können zum einen Reibungsverluste vermieden werden und zum anderen kann der Abrieb und somit der Verschleiß vermindert werden.

Zum Einstellen des Übersetzungsverhältnisses kann nun das Ubersetzungselement längs des Außenumfangs des Kegelstumpfs bewegt werden. Hierbei kann etwa eine Schneckengetriebewelle eingesetzt werden, welche mit einem Innengewinde in Bohrungen eines Führungsblocks des Übersetzungselements in Eingriff kommen. Wird nun die Schneckengetriebewelle in eine Drehbewegung versetzt, so kann sich das Übersetzungselement längs der Achse der Schneckengetriebewelle bewegen. Es sei an dieser Stelle ebenfalls angemerkt, daß auch andere Antriebsarten für das Übersetzungselement denkbar sind. Beispielsweise könnte ein hydraulischer Antrieb verwendet werden. Möglich sind etwa auch elektrische Antriebe.

Die Drehachse des Übersetzungselements kann mit einem Winkel von 90° zur Drehachse des Kegelstumpfs angeordnet sein. Das Übersetzungselement kann jedoch auch andere Winkelverhältnisse zur Drehachse des Kegelstumpfs einnehmen. Hierbei kann die Drehachse des Übersetzungselements auch zur Drehachse des Kegelstumpfs einstellbar vorgesehen sein.

Das Übersetzungselement kann weiterhin ein Übersetzungsstirnrad aufweisen, welches drehfest mit einem die Zapfen aufnehmenden Drehteil des Übersetzungselements verbunden ist. Dieses Stirnrad kann dann weiterhin mit dem Angleichungsgetriebe in Eingriff kommen, wobei das Angleichungsgetriebe Stirnräder aufweisen kann, welche nacheinander mit dem Übersetzungsstirnrad in Eingriff kommen können, wenn das Übersetzungselement längs des Außenumfangs des Kegelstumpfs bewegt wird. Weiterhin kann das Angleichungsgetriebe Verbindungsstirnräder aufweisen, welche die einzelnen Stirnräder drehfest miteinander in Eingriff bringen. Dadurch kann ebenfalls der Verschleiß beim Verschieben des Übersetzungselements vermindert werden. Zudem kann ein etwa auftretender Schaltdruck reduziert werden.

Des weiteren können anstatt einem Angleichungsgetriebe beispielsweise vier eingesetzt werden, die jeweils über ein Übersetzungselement mit dem Kegelstumpf in Eingriff stehen und jeweils um 90 Grad versetzt am Kegelstumpf angeordnet sind. Dies kann insbesondere dann vorteilhaft sein, wenn etwa ein größeres Getriebeeingansdrehmoment aufzunehmen ist. Bei der Anordnung von etwa vier Angleichungsgetrieben mit vier Übersetzungselementen würde die von den Zapfen zu übertragende Kraft auf ein Viertel absinken, so daß das Eingangsdrehmoment des Getriebes entsprechend angehoben werden kann. Ein weiterer Vorteil besteht darin, daß bei einem gleichen Kegelstumpfdurchmesser eine größere Gewindeganganzahl verwendet werden kann (was eine geringere Teilung zur Folge hat und damit einen geringeren freien Zwischenraum zwischen den Gewindeflanken zur Aufnahme der Zapfen des Übersetzungselements), da aufgrund der Kräfteviertelung eine geringere Zapfenstärke gewählt werden kann. Dadurch kann die Getriebespreizung nochmals erhöht werden.

Im folgenden werden Beispiele der Erfindung anhand von beiliegenden, schematischen Zeichnungen näher erläutert. Es zeigen:
Fig. 1 eine Draufsicht auf das erfindungsgemäße Fahrzeuggetriebe;
Fig. 2 eine Draufsicht von oben auf den erfindungsgemäßen Kegelstumpf;
Fig. 3 eine Schnittansicht des Kegelstumpfs;
Fig. 4 eine teilweise geschnittene Ansicht des Übersetzungselements, wobei der Schnitt entlang der Verschieberichtung des Übersetzungselements durch den Führungsblock und dann durch das Zapfenstirnrad verläuft;
Fig. 5 eine teilweise Schnittansicht des Übersetzungselements, wobei der Schnitt senkrecht zur Verschiebungsrichtung des Übersetzungselements durch den Führungsblock verläuft;
Fig. 6 eine schematische Seitenansicht des Angleichungsgetriebes;
Fig. 7 eine schematische Draufsicht auf das Angleichungsgetriebe; und
Fig. 8 eine schematische und teilweise geschnittene Ansicht des erfindungsgemäßen Fahrzeuggetriebes.

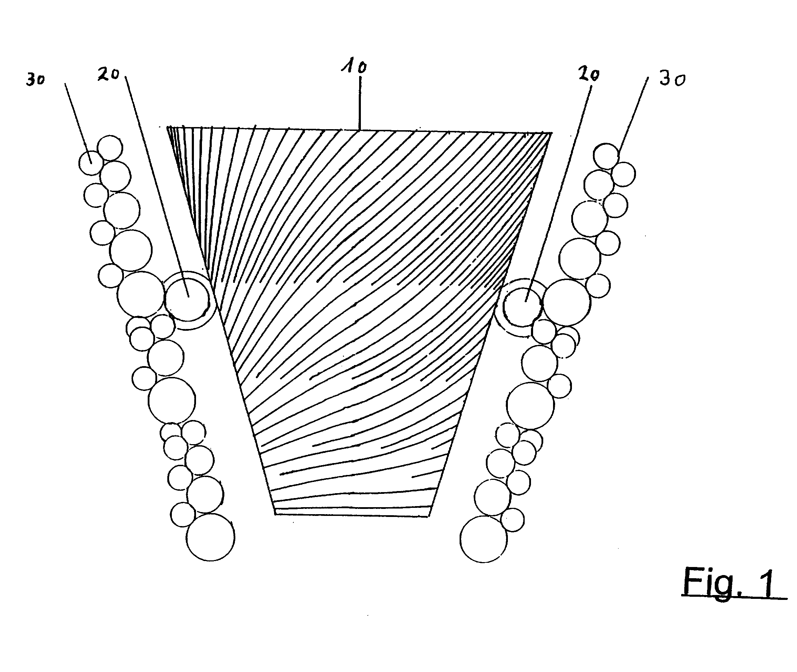

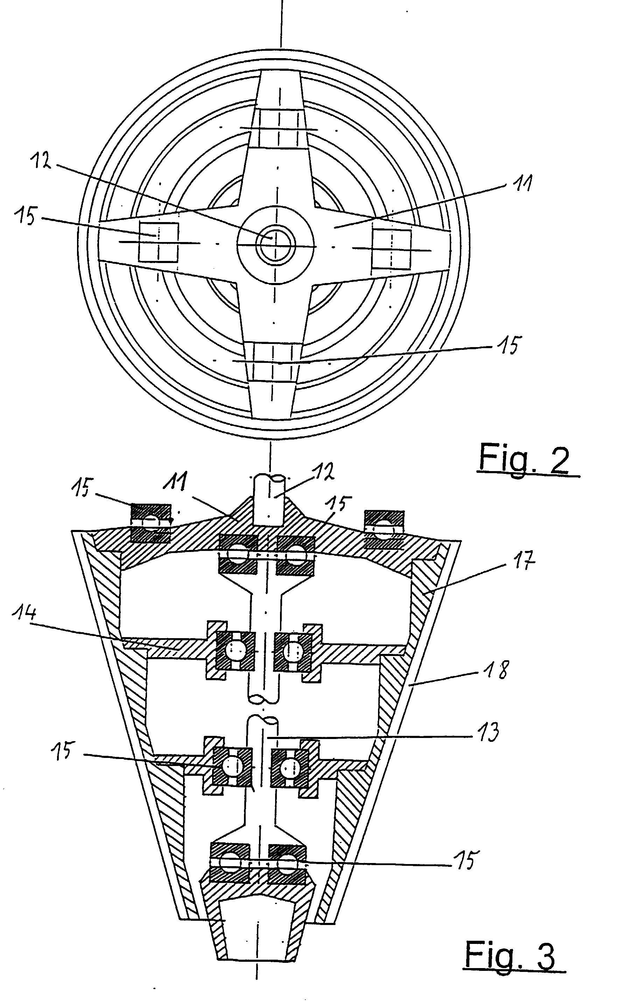

Die Fig. 1 zeigt einen Kegelstumpf 10, der weitgehend als hohler Körper ausgebildet ist. Auf der Oberseite des Kegelstumpfs 10 befinden sich zwei Querbalken 11 über Kreuz (s. auch Fig. 2), die zur Aufnahme von vier Wälzlagern 15 und einer zentral angebrachten Antriebswelle 12 dienen (s. auch Fig. 2 und 3). Weiterhin ist ein Angleichungsgetriebe 30 dargestellt, welches über ein Übersetzungselement 20 mit dem Kegelstumpf 10 in Eingriff steht.

Die Fig. 3 zeigt den Kegelstumpf 17, der auf einer zentralen Welle 13 über Querbalken 14 auf je acht längs zur Welle und acht quer zur Welle laufenden Wälzlagern 15 verbaut ist, so daß eine Drehung um die Längsachse möglich ist.

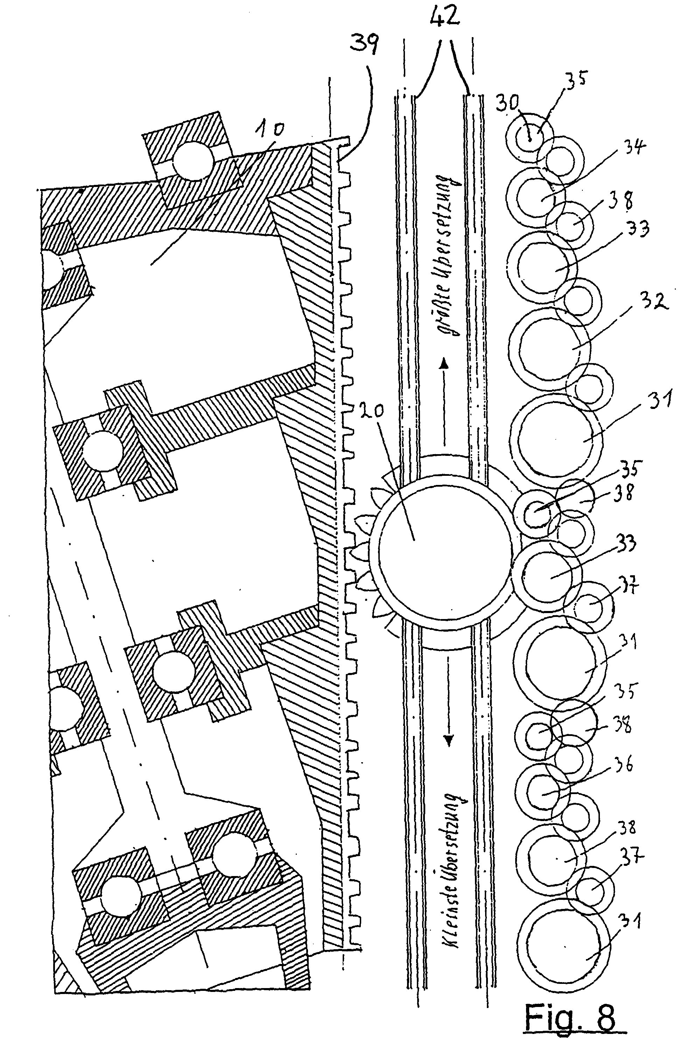

Die Oberfläche des Kegelstumpfs 18 kann aus Stahl bestehen, in die ein Gewinde 39 gearbeitet ist (siehe Fig.8). Es sind jedoch auch andere Materialien denkbar. Am oberen Rand (großer Durchmesser) des Kegelstumpfs 10 kann das Gewinde beispielsweise 64 Gewindegänge aufweisen, wobei die Teilung (P) beispielsweise ca. 10,5 mm und der Steigungswinkel beispielsweise 45° betragen kann. Aufgrund der sich verjüngenden Form des Kegelstumpfs kann sich sowohl die Zahl der Gewindegänge (stufenweise) als auch das Maß der Teilung (kontinuierlich und/oder stufenweise) ändern. Da die Schraubenlinien der Gewindegänge keine Gerade ist, sondern einen leichten Radius beschreiben, beträgt der Winkel des letzten unteren Gewindegangs beispielsweise nur noch 3° (vergl. Fig. 1).

Wie in der Fig. 1 ebenfalls dargestellt ist, können beispielsweise fünf Abstufungen der Gewindeganganzahl vorgesehen sein (64 - 32 - 16 - 8 - 4 - 2 - 1). Hierbei kann sich, wie ebenfalls dargestellt ist, die Teilung der Gewindegänge 39 innerhalb einer Stufe gleichmäßig ändern. Wie dargestellt, nimmt die Teilung mit kleinerem Kegelstumpfdurchmesser ab. Um den Übersetzungsunterschied beim Schalten zwischen zwei Stufen zu minimieren, sind entsprechende Stirnraddurchmesser des Angleichungsgetriebes 30 vorgesehen.

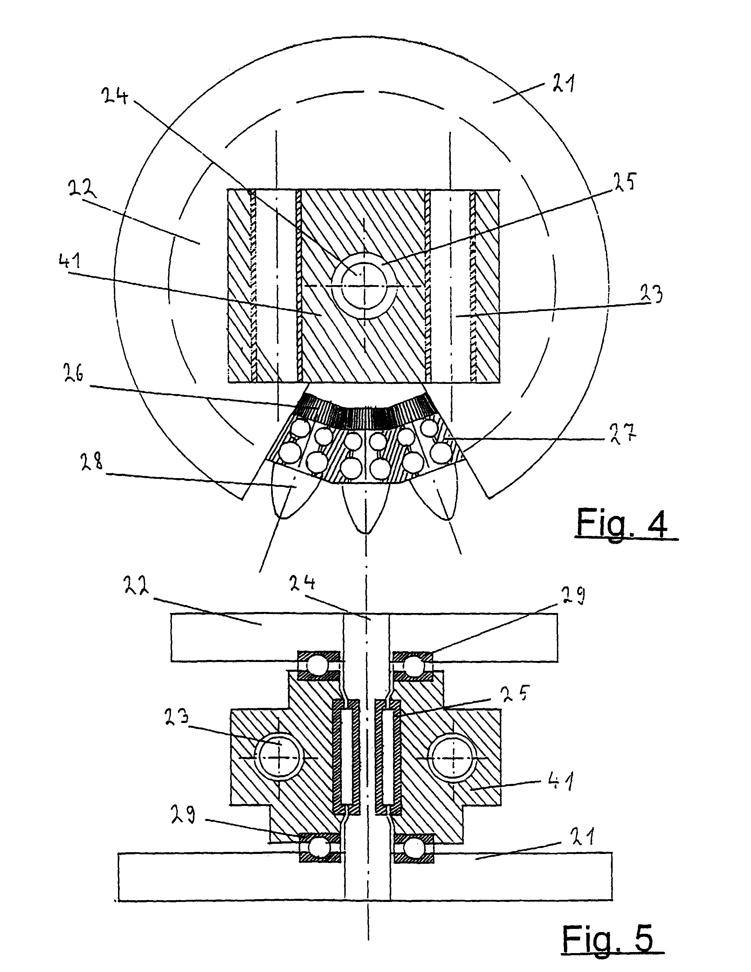

In den Fig. 4 und 5 ist das Übersetzungselement 20 dargestellt. Es übernimmt die Funktion eines Schneckenrades, dessen Längsachse beispielsweise 90° über Kreuz zu der des Kegelstumpfes 10 liegt. Die Drehbewegung des Kegelstumpfs 10 wird direkt auf das Zapfenstirnrad 21 übertragen. Die Zapfen 28 sind mit ihrem Schaft 27 und dem Stirnrad 21 mittels Wälzkörper so verbaut, daß sie mit diesem jeweils ein Wälzlager bilden, was eine Drehung um ihre eigene Längsachse ermöglicht. Am unteren Schaftende 27 befindet sich je ein Stirnrad 26, das die Drehbewegung eines Zapfens 28 über ein nicht dargestelltes Zwischenrad gleichzeitig auf die anderen Zapfen 28 überträgt, so daß die Drehzahldifferenz zwischen Kegelstumpf 10 und Zapfenstirnrad 21 möglichst gering ist. Das Zapfenstirnrad 21 ist über eine Welle 24 fest mit dem gegenüberliegenden Stirnrad 22 verbunden. Die Welle 24 ist über Rädialnadellager 25 und Rillenkugellager 29 -drehbar mit dem Führungsblock 41 verbaut. Dieser Führungsblock besitzt Bohrungen mit Innengewinde 23, die sich um 90° über Kreuz zur Welle 24 befinden. Diese dienen zur Aufnahme der beiden Schneckengetriebewellen 42 (siehe Fig.8), so daß durch Drehen dieser das Übersetzungselement 20 in der Höhe variabel verstellbar ist.

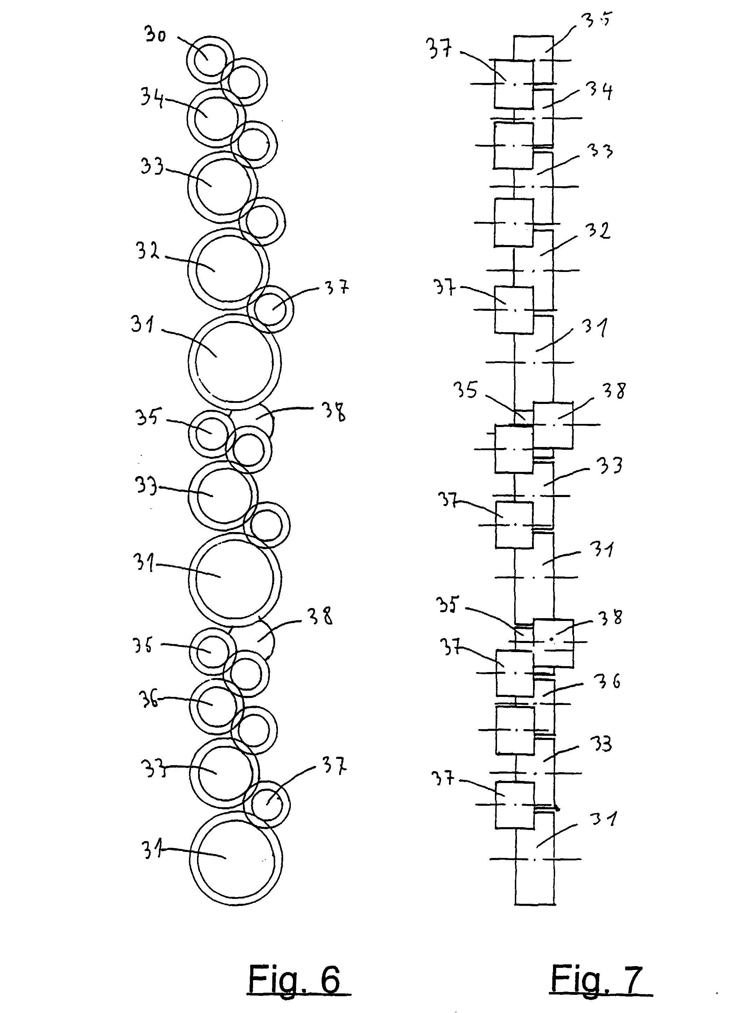

In den Fig. 6 und 7 ist das Angleichungsgetriebe 30 dargestellt, dessen Aufgaben darin besteht,
1. die Drehzahlsprünge anzugleichen, die sich bedingt durch die Halbierung der Gewindegänge 39 auf dem Kegelstumpf 10 ergeben,
2. einen gleichmäßigen Drehzahlverlauf zu ermöglichen und
3. die Drehbewegung an ein weiteres, beliebiges Bauelement (Wellen, Zahnräder usw.) weiterzugeben.

Der Aufbau des Angleichungsgetriebes 30 setzt sich aus einer Reihe von Stirnrädern 31 - 36 sowie deren Verbindungsstirnrädern 37 und 38 zusammen. Die Stirnräder 31 - 36 sind der Größe nach so angeordnet, daß sie die Drehzahlsprünge des Übersetzungselements 20 ausgleichen und einen gleichmäßigen Drehzahlverlauf ermöglichen. Die Stirnräder 37 und 38 stellen eine starre Verbindung zwischen den Stirnrädern 31 - 36 dar und ermöglichen so die Weitergabe der Drehbewegung an ein weiterführendes Bauelement (Welle, Verteilergetriebe usw.).

Die für eine Gewindeganganzahlstufe des Kegelstumpfs 10 gewählte Abstufung beispielsweise der Stirnräder 32 - 36 stellt nur ein Beispiel dar. Es wäre auch denkbar, daß ein Stirnrad des Angleichungsgetriebes 30 dem Übersetzungsgetriebe 20 nachgeführt würde. Das würde jedoch beim Übergang von einer Gewindeganganzahlstufe zur nächsten bedeuten, daß sich für einen ruckfreien Übergang der Stirnraddurchmesser für die neue Gewindeganganzahlstufe verdoppeln müßte, usw. Um dies konstruktionstechnisch auszugleichen, wird der Stirnraddurchmesser in einer Stufe mit sich verjüngendem Kegelstumpfdurchmesser immer weiter vermindert, so daß sich der Stirnraddurchmesser beim Stufenübergang wieder in etwa verdoppeln kann. Dadurch kann der Getriebeaufbau kompakter ausgeführt werden.

Die Fig. 8 zeigt eine weitere schematische Darstellung des erfindungsgemäßen Getriebes.

Das erfindungsgemäße Getriebe kann in Fahrzeugen aller Art zum Einsatz kommen, die Anwendung ist jedoch nicht darauf beschränkt. Als weitere Anwendungsbeispiele wären etwa Werkzeugmaschinen oder Generatoren zu nennen. Allgemein ist die Erfindung für alle Vorrichtungen zu verwenden, die mit einem Antrieb versehen sind, welcher einen bestimmten optimalen Drehzahlbereich aufweist.

## Patentansprüche

1. Getriebe mit
einem Kegelstumpf (10), der mit einer Antriebswelle (12) gekoppelt ist,
einem Übersetzungselement (20), dessen Drehachse zur Drehachse des Kegelstumpfs (10) geneigt ist und das mit dem Kegelstumpf (10) in Eingriff steht, und
einem Angleichungsgetriebe (30), das mit dem Ubersetzungselement (20) in Eingriff steht und mit einer Abtriebswelle gekoppelt ist, wobei
das Ubersetzungselement (20) zum Einstellen des Übersetzungsverhältnisses längs eines Außenumfangs des Kegelstumpfs (10) verschiebbar ist,
**dadurch gekennzeichnet,**
daß der Kegelstumpf (10) an seinem Außenumfang Gewindegänge aufweist, deren Anzahl sich mit verjüngendem Kegelstumpfdurchmesser stufenweise verringert und deren Steigungswinkel sich mit verjüngendem Kegelstumpfdurchmesser vermindert.

2. Getriebe nach Anspruch 1, dadurch gekennzeichnet, daß sich in einer Stufe die Teilung des Gewindes mit sich verjüngendem Kegelstumpfdurchmesser vermindert.

3. Getriebe nach Anspruch 1 oder 2, dadurch gekennzeichnet, daß das Gewinde durch Erhebungen (39) gebildet ist.

4. Getriebe nach zumindest einem der Ansprüche 1 bis 3, dadurch gekennzeichnet, daß das Übersetzungselement (20) Zapfen (28) aufweist, die mit den Erhebungen (39) in Eingriff treten.

5. Getriebe nach einem der Ansprüche 1 bis 4, dadurch gekennzeichnet, daß die Zapfen (28) jeweils drehbar in dem Übersetzungselement (20) aufgenommen und miteinander gekoppelt sind.

6. Getriebe nach einem der Ansprüche 1 bis 5, dadurch gekennzeichnet, daß das Ubersetzungselement (20) ein Übersetzungsstirnrad (22) aufweist, das drehfest mit den Zapfen (28) verbunden ist, wobei das Stirnrad (22) in das Angleichungsgetriebe (30) eingreift.

7. Getriebe nach einem der Ansprüche 1 bis 6, dadurch gekennzeichnet, daß das Übersetzungselement (20) einen Führungsblock (41) mit zumindest einer Bohrung mit einem Innengewinde (23) aufweist, das mit einer Schnekkengetriebewelle (42) zum Bewegen des Übersetzungselements (20) in Eingriff steht.

8. Getriebe nach einem der Ansprüche 1 bis 7, dadurch gekennzeichnet, daß das Angleichungsgetriebe (30) Stirnräder (31 - 36) aufweist, die nacheinander mit dem Übersetzungsstirnrad (22) in Eingriff kommen, wobei die Stirnräder (31 - 36) mit Verbindungsstirnrädern (37, 38) in Eingriff stehen.

9. Verwendung des Getriebes nach zumindest einem der Ansprüche 1 bis 8 für Fahrzeuge.

10. Verwendung nach Anspruch 9, dadurch gekennzeichnet, daß die Fahrzeuge Landfahrzeuge sind.

## Claims

1. A gear unit comprising
a truncated cone (10) coupled to a drive shaft (12),
a transmission element (20) having an axis of rotation at an angle to the axis of rotation of the truncated cone (10) and engaging the truncated cone (10), and
a compensating gear (30) which engages the transmission element (20) and is coupled to a driven shaft, wherein
the transmission element (20) is movable along an outer periphery of the truncated cone (10) in order to adjust the transmission ratio,
characterised in that
the outer periphery of the truncated cone (10) has screwthreads, the number of which decreases stepwise with the diameter of the truncated cone and the pitch angle of which decreases with the diameter of the truncated cone.

2. A gear unit according to claim 1, characterised in that in one gear, the pitch of the thread decreases with the diameter of the truncated cone.

3. A gear unit according to claim 1 or 2,
characterised in that the thread is formed by raised portions (39).

4. A gear unit according to at least one of claims 1 to 3, characterised in that the transmission element (20) has studs (28) which engage the raised portions (39).

5. A gear unit according to any of claims 1 to 4, characterised in that the studs (28) are rotatably received in the transmission element (20) and coupled together.

6. A gear unit according to any of claims 1 to 5, characterised in that the transmission element (20) has a transmission spur gear (22) which is non-rotatably connected to the studs (28), the spur gear (22) engaging the compensating gear (30).

7. A gear unit according to any of claims 1 to 6, characterised in that the transmission element (20) comprises a guide block (21) formed with at least one bore having an inner thread (23) which engages a worm gear shaft (42) for moving the transmission element (20).

8. A gear unit according to any of claims 1 to 7, characterised in that the compensating gear (30) has spur gears (31 - 36) which successively engage the transmission spur gear (22), wherein the spur gears (31 - 36) engage connecting spur gears (37, 38).

9. Use of the gear unit according to at least one of claims 1 to 8 for vehicles.

10. Use according to claim 9, characterised in that the vehicles are land vehicles.

## Revendications

1. Transmission à engrenage, comportant :
un élément tronconique (10), couplé à un arbre d'entraînement (12),
un élément de transmission cinématique (20), dont l'axe de rotation est incliné par rapport à l'axe de rotation de l'élément tronconique (10) et qui est engrené avec l'élément tronconique (10), et
une transmission de compensation (30), mise en prise avec l'élément de transmission cinématique (20) et couplée à un arbre d'entraînement, où
l'élément de transmission cinématique (20) est déplaçable le long d'une périphérie extérieure de l'élément tronconique (10), dans le but de régler le rapport de transmission,
caractérisée en ce que
l'élément tronconique (10) présente sur sa périphérie extérieure des filets dont le nombre diminue progressivement avec la réduction par conicité du diamètre de l'élément tronconique, et dont l'angle de pas va en diminuant avec la réduction par conicité du diamètre de l'élément tronconique.

2. Transmission à engrenage selon la revendication 1, caractérisée en ce que la division par filets du filetage va en diminuant progressivement avec la réduction par conicité du diamètre de l'élément tronconique.

3. Transmission à engrenage selon la revendication 1 ou 2, caractérisée en ce que le filetage est constitué par des bossages ou reliefs (39).

4. Transmission à engrenage selon au moins l'une des revendications 1 à 3, caractérisée en ce que l'élément de transmission cinématique (20) présente des tétons (28) qui entrent en prise avec les bossages (39).

5. Transmission à engrenage selon l'une des revendications 1 à 4, caractérisée en ce que les tétons (28) sont chacun logés dans l'élément de transmission cinématique (20) de façon à pouvoir tourner, et sont couplés ensemble.

6. Transmission à engrenage selon l'une des revendications 1 à 5, caractérisée en ce que l'élément de transmission cinématique (20) présente une roue à denture droite de transmission (22), qui est reliée de façon assujettie en rotation aux tétons (28), la roue à denture droite (22) s'engrenant dans la transmission de compensation (30).

7. Transmission à engrenage selon l'une des revendications 1 à 6, caractérisée en ce que l'élément de transmission cinématique (20) présente un bloc de guidage (41) ayant au moins un perçage doté d'un taraudage (23), qui est mis en prise avec un arbre de transmission à vis sans fin (42) pour assurer le déplacement de l'élément de transmission cinématique (20).

8. Transmission à engrenage selon l'une des revendications 1 à 7, caractérisée en ce que la transmission de compensation (30) présente des roues à denture droite (31-36) qui s'engrènent les unes après les autres avec la roue à denture droite de transmission (22), les roues à denture droite (31-36) étant engrenées avec des roues à denture droite de liaison (37-38).

9. Utilisation de la transmission selon au moins l'une des revendications 1 à 8, pour des véhicules.

10. Utilisation selon la revendication 9, caractérisée en ce que les véhicules sont des véhicules routiers.
